# DEMANDE DE BREVET EUROPEEN

(11) **EP 2 564 963 A1**
(43) Date de publication de la demande: **06.03.2013**
(21) Numéro de dépôt: 12182802.4
(22) Date de dépôt: 03.09.2012
(51) Int. Cl.: B23C 5/22

(54) **Vis de bridage à empreinte positive**

(30) Priorité: 01.09.2011 FR 1157758
(71) Demandeur: Sandvik Tooling France, 45100 Orléans (FR)
(72) Inventeur: Fouquer, Richard, 37540 Saint Cyr sur Loire (FR)
(74) Mandataire: Hirsch & Associés

(57) **Abrégé**

L'invention se rapporte à une vis de bridage d'une plaquette de coupe (48) dans un logement dédié de porte-outil (60), la vis de bridage comprenant une tige filetée (22) et une tête, la tête de vis comportant une zone munie d'une portion tronconique de maintien de la plaquette (48) dans le logement d'un porte-outil (60), la portion tronconique s'étendant depuis la tige filetée (22) entre une petite base et une grande base ; une empreinte positive (28) d'entraînement de la vis (20) en vissage et en dévissage, l'empreinte positive (28) s'étendant suivant l'axe de la vis (20), depuis la zone munie de la portion tronconique, du côté opposé à la tige filetée (22).

L'invention permet l'obtention d'un procédé amélioré de nettoyage d'un système de bridage de plaquettes de coupe et l'obtention d'un système de bridage d'une plaquette de coupe se nettoyant facilement.

## Description

L'invention se rapporte à une vis de bridage d'une plaquette de coupe et à son utilisation pour le bridage d'une plaquette de coupe dans un logement de porte-outil. L'invention se rapporte aussi à un porte-outil comprenant une telle vis de bridage assurant le bridage d'une plaquette de coupe et à une utilisation de ce porte-outil. L'invention se rapporte enfin à un tournevis ou à un embout de tournevis susceptible de coopérer avec la vis de bridage.

La présente invention se rapporte au domaine technique général de l'enlèvement de matière par formation de copeaux. Pour l'usinage de métaux et d'alliages, il est connu d'utiliser un porte-outil recevant une plaquette de coupe en position de coupe. Lors de l'utilisation d'un porte-outil, les plaquettes de coupe en position de coupe présentent des arêtes de coupe réalisant l'usinage d'une pièce à usiner. Ces arêtes de coupe permettent d'effectuer un fraisage, par exemple un surfaçage ou un surfaçage dressage, de la pièce à usiner.

Les plaquettes de coupe et leurs arêtes de coupe sont très sollicitées lors de l'usinage. Il est ainsi prévu de remplacer les plaquettes de coupe usées après un certain nombre d'opérations d'usinage. Ce remplacement des plaquettes est permis par l'utilisation de système de bridage amovible de plaquettes de coupe dans des logements respectifs du porte-outil. Les différents systèmes de bridage proposés présentent l'inconvénient d'être sujets à un fort endommagement par les copeaux produits lors de l'usinage. Ces copeaux peuvent en effet être projetés sur le système de bridage limitant la possibilité de débrider facilement la plaquette de coupe présentant une usure de fin de vie.

Ainsi certains de ces systèmes proposés utilisent des vis permettant par vissage de brider une plaquette de coupe dans un logement selon une position de coupe voulue et par dévissage de retirer rapidement une plaquette de coupe usée du logement afin de la remplacer par une nouvelle plaquette de coupe. La projection de copeaux pendant l'usinage peut altérer la tête de vis. Une telle altération correspond par exemple à l'encrassement par les copeaux de la surface d'entraînement en vissage ou dévissage de la vis gênant alors le dévissage de la vis pour le remplacement d'une plaquette usée.

Un nettoyage ou décrassage de ces systèmes de bridage proposés est alors souvent conseillé avant de pouvoir retirer la plaquette de coupe. Cependant, il peut être difficile d'enlever ces particules de petites dimensions, y compris en utilisant en utilisant le lavage et décrassage par ultrasons.

Il existe donc un besoin pour un procédé amélioré de nettoyage d'un système de bridage de plaquettes de coupe ou pour un système de bridage d'une plaquette de coupe se nettoyant facilement.

Pour cela l'invention propose une vis de bridage d'une plaquette de coupe dans un logement dédié de porte-outil, la vis de bridage comprenant une tige filetée et une tête, la tête de vis comportant
- une zone munie d'une portion tronconique de maintien de la plaquette dans le logement d'un porte-outil, la portion tronconique s'étendant depuis la tige filetée entre une petite base et une grande base;
- une empreinte positive d'entraînement de la vis en vissage et en dévissage, l'empreinte positive s'étendant suivant l'axe de la vis, depuis la zone munie de la portion tronconique, du côté opposé à la tige filetée.

Selon une variante, l'empreinte positive s'étend à l'intérieur d'un cylindre fictif ayant l'axe de la vis pour axe de révolution et présentant un diamètre inférieur ou égal au diamètre de la grande base de la portion tronconique.

Selon une variante, l'empreinte positive s'étend dans l'axe de la vis sur une longueur supérieure ou égale à 2mm.

Selon une variante, la tête de vis comprend en outre une zone de butée d'un embout de tournevis d'entraînement de la vis, la zone de butée étant intermédiaire entre la zone munie de la portion tronconique et l'empreinte positive, la zone de butée étant répartie autour de l'axe de la vis et de préférence constituée par un chanfrein, plus préférentiellement par un chanfrein de 45° par rapport à l'axe de la vis.

Selon une variante, la forme positive de l'empreinte positive est choisie dans le groupe de forme consistant en :
- une forme cruciforme, de préférence cruciforme Torx®;
- une forme polygonale à facettes planes;
- une forme polygonale à facettes curvilignes.

Selon une variante, la tige filetée présente un diamètre supérieur ou égale à 1,6 mm et de préférence inférieure à 10 mm, le diamètre étant plus préférentiellement choisi dans l'intervalle de diamètre de 1,6 à 8 mm.

Selon une variante, la zone munie de la portion tronconique est pleine.

Selon une variante, la vis de bridage comprend un canal de lubrification s'étendant suivant l'axe de la vis et débouche hors de la vis à travers l'empreinte positive d'entraînement de la vis.

Selon une variante, la vis est dépourvue d'empreinte négative d'entraînement de la vis en vissage et en dévissage.

L'invention propose aussi une utilisation de la vis de bridage précédente pour fixer une plaquette de coupe dans un logement de porte-outil, la portion tronconique de la vis venant en contact d'une surface correspondante de la plaquette de coupe.

L'invention propose encore un porte-outil comprenant au moins un logement logeant une plaquette de coupe, le porte-outil comprenant en outre la vis de bridage précédente, la vis de bridage assurant le bridage de la plaquette dans le logement par la mise en contact de la portion tronconique de la vis avec une surface correspondante de la plaquette de coupe.

Selon une variante, la vis de bridage assure le bridage de la plaquette:
- soit en traversant la plaquette de coupe, la plaquette de coupe étant munie d'un trou de bridage comprenant à une de ses extrémités la surfaceune partie correspondante à la portion tronconique de la vis de bridage ;
- soit en étant disposée tangentiellement à la plaquette de coupe, la plaquette de coupe étant munie, sur une face de bridage, de la surface 'une partie correspondante à la portion tronconique de la vis de bridage.

L'invention propose en outre une utilisation du porte-outil précédent pour l'usinage de pièce en fonte.

L'invention propose en outre un embout de tournevis comprenant une empreinte négative susceptible de coopérer avec l'empreinte positive de la vis précédente, pour entraîner la vis en vissage et en dévissage.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, une vue en perspective d'une vis de bridage selon un mode de réalisation;
- figure 2, une vue de côté de la vis de bridage de la figure 1 ;
- figure 3, une vue de côté et avec côtes d'une vis de bridage selon un mode de réalisation;
- figure 4, une vue de face de la tête de vis de la vis selon la figure 3 ;
- figure 5, une vue schématique de deux plaquettes logées dans un porte-outil à l'aide de vis selon un mode de réalisation dans lequel les vis comprennent un canal de lubrification;
- figure 6, une vue schématique du bridage par appui tangentiel d'une plaquette de coupe dans un porte-outil à l'aide d'une vis selon un mode de réalisation;
- figure 7, une vue schématique du bridage d'une plaquette de coupe dans un porte-outil à l'aide d'une vis selon un mode de réalisation traversant la plaquette.

L'invention se rapporte à une vis de bridage d'une plaquette de coupe. La vis proposée est ainsi prévue pour assurer le bridage d'une plaquette de coupe dans un logement de porte-outil. On rappelle que le bridage correspond à la fixation de plusieurs pièces entre elles, ici de la plaquette avec le porte-outil, à l'aide d'une pièce intermédiaire, ici la vis de bridage. La vis de bridage est ainsi notamment distincte de la plaquette à brider.

Cette vis comporte une tige filetée et une tête. La tige filetée est prévue pour coopérer avec un taraudage correspondant du porte-outil destiné à loger une plaquette de coupe. La direction principale d'extension de la tige filetée définit l'axe de la vis.

La vis proposée étant une vis de bridage d'une plaquette de coupe dans un logement, la tête de la vis comporte une zone prévue pour assurer le maintien de la plaquette dans le logement de porte-outil. Cette zone est munie d'une portion tronconique de maintien de la plaquette dans le logement du porte-outil. La portion tronconique de maintien est prévue pour venir au contact d'une surface correspondante de la plaquette de coupe afin de plaquer la plaquette de coupe au fond du logement du porte-outil dans la position de coupe. La portion tronconique de maintien assure ainsi le serrage de la plaquette venant en butée au fond du logement. Cette portion tronconique s'étend tout autour de l'axe de la vis pour assurer la possibilité d'un contact avec la plaquette indépendamment de l'orientation angulaire de la vis autour de son axe. Du fait de la géométrie tronconique, la portion tronconique s'étend entre une petite base et une grande base, c'est-à-dire entre une base présentant un petit rayon et une base présentant un plus grand rayon. La portion tronconique est orientée selon l'axe de la vis en s'étendant depuis la tige filetée depuis la petite base vers la grande base. En d'autres termes, la portion tronconique s'élargit en s'étendant depuis la tige filetée dans l'axe de la vis. Le petit rayon de la petite base de la portion tronconique peut alors correspondre au rayon de la tige filetée de la vis.

La tête de vis comporte en outre une empreinte d'entraînement de vis en vissage et en dévissage. L'empreinte est disposée sur la zone munie de la portion tronconique, pour permettre à un tournevis ou à un embout de tournevis d'accéder à l'empreinte lorsque la tige filetée est reçue dans le taraudage correspondant du porte-outil. Ainsi l'empreinte d'entraînement de la tête de vis correspond à une empreinte d'entrainement de la vis en vissage ou dévissage à l'aide d'un tournevis ou d'un embout de tournevis.

De façon classique, l'empreinte s'étend suivant l'axe de la vis pour faciliter l'entraînement en vissage et dévissage. La forme de l'empreinte correspond par exemple à une forme choisie dans le groupe consistant en:
- une forme cruciforme, de préférence cruciforme Torx®;
- une forme polygonale à facettes planes;
- une forme polygonale à facettes curvilignes.

Les formes polygonales à facettes planes comprennent notamment les formes hexagonale, carrée et triangulaire. Dans le cas des formes polygonales à facettes curvilignes, les formes possibles correspondent à des formes proche de polygones à facettes planes, à la difference que les facettes sont soit concaves soit convexes. Ainsi dans le cas d'une forme polygonale à facettes curvilignes de type triangulaire, la forme présente trois facettes comme la forme triangulaire à facettes planes. Les formes polygonales à facettes curvilignes comprennent notamment les formes de type carré (quatre facettes) et héxagonale (six facettes). La forme cruciforme Torx® correpond à une forme polygonale à facettes curvilignes de type hexagonale avec des facettes concaves.

L'empreinte d'entraînement présente toutefois la particularité d'être une empreinte positive, c'est-à-dire une forme en saillie ou encore une forme mâle. Le caractère positif de l'empreinte s'oppose à la notion d'empreinte négative qui correspond à une empreinte réalisée en creux dans la matière c'est-à-dire à une empreinte présentant une forme femelle. Du fait de cette forme positive, l'empreinte s'étend du côté opposé à la tige filetée, depuis la zone munie d'une portion tronconique, le tout en suivant l'axe de la vis. Une telle caractéristique de la vis revient à inverser les formes mâles et femelles d'entraînement d'une vis classique et d'un tournevis correspondant, à savoir :
- allonger la tête de vis avec une partie mâle ; et
- équiper le bout du tournevis avec une forme femelle compatible, c'est-à-dire avec un embout présentant une forme creuse correspondante.

D'ailleurs, l'invention se rapporte aussi à un embout de tournevis comprenant une empreinte négative susceptible de coopérer avec l'empreinte positive de la vis proposée. L'embout de tournevis peut être solidaire d'un tournevis ou être un embout amovible d'un manche de tournevis. En conséquence, dans la suite du document, les expressions "tournevis" et "embout de tournevis" seront indifféremment utilisées.

Le système de fixation formé par la vis de bridage présente l'avantage d'une grande compatibilité avec un environnement sujet à des risques d'encrassement ou d'obturation par des poussières telles que des copeaux lors de l'usinage.

D'une part, l'empreinte positive en présentant une surface d'entraînement en saillie, diminue le risque d'encrassement par des copeaux par rapport à des vis à empreintes femelles présentant une surface d'entraînement entourant une cavité dans laquelle cavité les copeaux peuvent facilement se loger et être difficilement délogés. Dans ce but de diminution du risque d'encrassement, la vis est avantageusement dépourvue d'empreinte négative d'entraînement de la vis en vissage et en dévissage.

D'autre part, dans le cas où éventuellement quelques copeaux sont accrochés par projection à la surface d'entraînement, la configuration en saillie de l'empreinte de la vis assure que les copeaux soient repoussés vers l'extérieur lorsque l'on engage le tournevis à embout creux pour visser et dévisser la vis.

Ces deux effets sont particulièrement utiles lorsque la vis de bridage assure le bridage en position de coupe d'une plaquette de coupe dans un logement de porte-outil. L'invention se rapporte aussi à un porte-outil comprenant la vis de bridage précédente et au moins un logement logeant une plaquette de coupe. La vis de bridage est alors utilisée pour assurer le bridage de la plaquette dans le logement du porte-outil.

Du fait des deux effets précédents, selon la nature du matériau usiné, la vis proposée permet de limiter partiellement ou totalement le recours à un nettoyage du porte-outil avant le changement de plaquettes usées après usinage. La vis de bridage est notamment particulièrement indiquée lorsque le porte-outil qui la comprend est utilisé pour l'usinage de pièce en fonte ou en carbone. En effet, le fraisage de pièce en fonte ou en carbone peut entraîner la formation de copeaux pulvérulents sous forme de poussières se logeant dans les moindres interstices autour de la plaquette. De tels copeaux pulvérulents sont particulièrement adhérents et difficiles à extraire dans les espaces fermés de petites dimensions, tel qu'une empreinte négative de tête de vis. De manière générale, en plus de la fonte et du carbone, la vis de bridage est indiquée pour l'usinage de pièce en tout autre matériau pulvérulent.

La vis proposée permet alors de se passer d'un nettoyage du système de bridage et/ou de permettre un nettoyage facilité par simple engagement d'un embout de tournevis sur l'empreinte de la vis avant l'entraînement en dévissage.

En définitive, la vis proposée permet l'obtention d'un procédé amélioré de nettoyage d'un système de bridage de plaquettes de coupe et l'obtention d'un système de bridage d'une plaquette de coupe se nettoyant facilement.

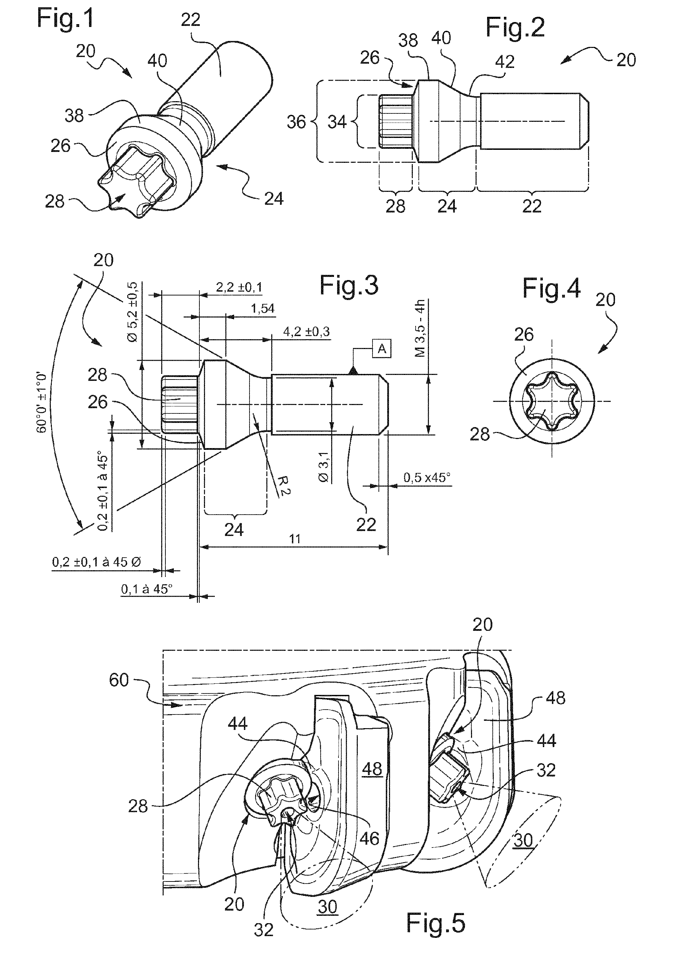

La figure 1 montre une vue en perspective de la vis de bridage 20 selon un mode de réalisation. La figure 2 montre une vue de côté de cette vis de bridage 20 selon le même mode de réalisation. La tige filetée 22 est représentée schématiquement sans filet, cependant le diamètre apparent de la tige filetée correspond au diamètre extérieure du filet. Selon l'axe de la vis 20, la vis présente ensuite la tête de vis comportant la zone 24 munie de la portion tronconique 40, et l'empreinte positive d'entraînement 28. Dans la zone 24, la portion tronconique 40 peut être bordée par une portion de raccordement 42 à la tige filetée 22, la portion de raccordement 42 correspondant ici à un arrondi, et par une portion cylindrique 38. La portion cylindrique présente un rayon égal au grand rayon de la grande base de la portion tronconique 40. Selon le mode de réalisation illustrée en figures 1 et 2, l'empreinte positive 28 s'étend à l'intérieur d'un cylindre fictif 36 ayant l'axe de la vis pour axe de révolution et présentant un diamètre égal au diamètre de la grande base de la portion tronconique 40. Toujours selon ce mode de réalisation, l'empreinte positive 28 peut même s'étendre à l'intérieur d'un cylindre fictif 34 ayant l'axe de la vis pour axe de révolution et présentant un diamètre inférieur au diamètre de la grande base de la portion tronconique. L'extension de l'empreinte de la vis à l'intérieur un cylindre fictif 34 de diamètre inférieur au diamètre de la grande base permet de limiter le couple maximum de serrage de la vis par l'utilisateur en comparaison avec une empreinte de la vis qui s'étendrait au-delà du cylindre fictif 36. Ceci permet d'éviter un serrage trop important de la vis du fait du non respect par l'utilisateur du couple de vissage indiqué.

Selon un aspect de la vis proposée, la vis 20 peut comprendre une zone de butée de l'embout de tournevis d'entraînement de la vis. Selon les figures 1 et 2, la zone de butée 26 est intermédiaire entre la zone 24 munie de la portion tronconique 40 et l'empreinte positive 28. La zone de butée 26 est ici représentée sous la forme d'un chanfrein annulaire. Ainsi tel qu'illustré, la zone de butée 26 est de préférence répartie autour de l'axe de la vis. En d'autres termes la zone de butée 26 permet au moins trois points d'appui pour le tournevis, ces au moins trois points d'appui étant répartis sur un cercle centré sur l'axe de la vis. Une telle disposition de la zone de butée permet d'assurer une réduction du jeu entre la vis et le tournevis (non représenté) en fin d'engagement du tournevis sur la tête de vis. La réduction du jeu obtenu correspond à une réduction du jeu angulaire de la direction d'engagement du tournevis par rapport à l'axe de la vis. Une réduction d'un tel jeu est significative par rapport au jeu angulaire qu'autorise une tête de vis à empreinte négative classique, le jeu permis par une empreinte négative classique pouvant être de l'ordre de 10 à 15 degrés. En effet, lors de l'utilisation d'une vis à empreinte négative classique avec un tournevis correspondant, la butée du tournevis sur la vis est réalisée dans le fond du creux formé par l'empreinte d'entrainement de la vis. Cette butée correspond à un contact ponctuel ou rectiligne très proche de l'axe de la vis alors que la surface de butée 26 de la vis proposée assure une butée du tournevis sur la vis, par un contact réparti tout autour de l'axe de la vis. Cette répartition du contact autour de l'axe de la vis limite le débattement possible du tournevis par rapport à l'axe de la vis, lorsque le tournevis est en butée. La réduction du jeu angulaire, permet d'assurer une meilleure transmission du couple du tournevis à la vis et permet d'améliorer la longévité de l'empreinte d'entraînement en évitant la détérioration de l'empreinte lorsque pour une vis à empreinte négative classique le tournevis n'est pas actionné selon l'axe de la vis. Selon un mode de réalisation préféré, la zone de butée répartie autour de l'axe de la vis est formée par un chanfrein de 45° plus ou moins 1°. Le mode de réalisation de la vis avec la zone de butée 26 précédemment décrite peut par exemple correspondre à un mode de réalisation de la vis où l'empreinte positive 28 s'étend à l'intérieur du cylindre fictif 34 à diamètre inférieure au diamètre de la grande base de la portion tronconique.

Selon un autre aspect de la vis proposée, la réalisation d'une empreinte d'entraînement en saillie permet aussi de réaliser une empreinte de plus grande dimension dans l'axe de la vis. En d'autres termes l'empreinte positive sur la vis proposée peut être plus longue qu'une empreinte classique négative de vis de bridage. En effet, une empreinte négative d'entraînement de vis de bridage étant en creux, la longueur de l'empreinte est limitée par la géométrie du reste de la vis et notamment la longueur de zone munie de la portion tronconique, alors que, dans la vis proposée, l'empreinte positive étant en saillie de la zone munie de la portion tronconique, la longueur n'est pas limitée par la géométrie de la vis.

Une plus grande longueur de l'empreinte d'entraînement permet un meilleur contact entre la vis et le tournevis. Ainsi selon cet aspect, l'empreinte positive peut s'étendre dans l'axe de la vis sur une longueur supérieure ou égale à 2mm. Dans le cas illustré en figures 1 et 2, l'empreinte positive s'étend dans l'axe de la vis sur une longueur égale à 2,2 mm plus ou moins 1 mm. Un tel mode de réalisation correspond à la vis 20 représentée en figure 3 qui montre une vue de côté et avec côtes. La figure 4 montre une vue de face de la vis selon le mode de réalisation selon la figure 3 et à la même échelle. Selon ce mode de réalisation de la vis avec les côtes illustrées, la tête de vis présente une empreinte d'entraînement cruciforme de forme Torx ®.

Indépendamment du choix de la longueur de l'empreinte d'entraînement, la réalisation de l'empreinte en saillie permet indirectement une amélioration du contact entre la vis et le tournevis par rapport à la réalisation d'une empreinte en creux. Cette amélioration du contact entre la vis et le tournevis est une conséquence de la facilité du nettoyage de la vis proposée par rapport à une vis à empreinte négative. Ce nettoyage facilité est lié au fait que, tel que précédemment décrit, sur une empreinte positive d'entraînement, les copeaux sont repoussés vers l'extérieur lorsque l'on engage le tournevis à embout creux, alors que dans le cas d'une vis à empreinte d'entraînement négative i.e. en creux, même après nettoyage, le peu de particules restantes est repoussé par le tournevis dans le fond de l'empreinte. Le repoussage des particules restantes au fond de l'empreinte négative a pour effet de réduire l'engagement du tournevis dans la tête de vis et donc diminuer la qualité du contact entre la vis et le tournevis en comparaison à l'engagement du tournevis dans une empreinte positive telle que proposée.

En tout état de cause la réalisation d'un meilleur contact entre la vis et le tournevis facilite le remplacement des plaquettes de coupe usées et améliore la durée de vie du tournevis et des vis de bridage en limitation leur détérioration due au mauvais entraînement.

Dans un même but d'amélioration de la durée de vie de la vis, indépendamment des aspects précédents, la réalisation d'une empreinte d'entraînement positive permet l'obtention d'une vis pleine ou au minimum d'une vis dont la zone 24 munie de la portion tronconique 40 est pleine. La notion de volume plein, ici qualifiant la vis 20 ou la zone 24 munie de la portion tronconique 40, correspond au fait que ce volume est dépourvu de zone en creux, tel qu'un alésage. Il faut toutefois noter que dans le cas de la vis 20, il n'est pas tenu compte, pour cette notion, de la présence de filets sur la tige filetée 22. Le cas de la zone 24 munie de la portion tronconique 40 pleine peut aussi être défini comme correspondant au fait que la portion tronconique présente un volume convexe au sens mathématiques. L'obtention d'une vis pleine ou d'une vis dont la zone munie de la portion tronconique est pleine, permet d'éviter la présence d'un évidement de matière qui fragilise la vis en diminuant notamment sa résistance aux efforts de torsion. Ainsi alors qu'une vis à empreinte négative présente une section critique entre le fond de l'empreinte négative et la portion tronconique de la tête de vis, la vis proposée selon ce mode de réalisation sans évidement de matière est plus robuste et présente donc une durée de vie améliorée.

L'obtention d'une vis pleine ou d'une vis dont la zone munie de la portion tronconique est pleine n'est possible qu'en l'absence d'empreinte d'entraînement creuse. Cependant la réalisation d'une empreinte d'entraînement positive telle que proposée n'implique pas que la vis 20 ou la zone 24 soit pleine. Ainsi selon un mode de réalisation, la vis 20 peut comprendre un canal de lubrification s'étendant suivant l'axe de la vis et débouchant hors de la vis à travers l'empreinte positive 28 d'entraînement de la vis. La figure 5 montre une vue schématique de deux plaquettes logées dans un porte-outil à l'aide de vis comprenant un canal de lubrification 32. Le canal de lubrification 32 correspond à un trou central permettant la lubrification de la zone conique 30 (délimitée en traits pointillés). Compte tenu du faible diamètre du canal de lubrification 32, la réalisation de ce canal 32 peut être effectuée tout en obtenant une robustesse pour la vis proposée 20 qui soit supérieure à la robustesse des vis avec empreinte négative d'entraînement.

Indépendamment du mode de réalisation choisi avec la zone 24 pleine ou traversée par un canal de lubrification 32, l'amélioration de la robustesse de la vis 20 est particulièrement utile dans le cas où la vis 20 présente un faible diamètre, c'est-à-dire lorsque le diamètre de la tige filetée est faible. Ainsi, la vis proposée permet d'améliorer notablement la robustesse des vis dont la tige filetée présente un diamètre supérieur ou égale à 1,6 mm et de préférence inférieure à 10 mm. Selon un mode de réalisation, le diamètre de la tige filetée est choisi dans l'intervalle de diamètre de 1,6 à 8 mm, comme pour la vis illustrée en figure 3 dont la tige filetée présente un diamètre de caractéristique M 3,5 mm - 4h.

La figure 5 permet d'illustrer que la plaquette de coupe 48 peut présenter une surface de butée 44. La surface de butée 44 de la plaquette est une partie correspondante à la portion tronconique (ici non visible) de la vis de bridage proposée 20. Cette partie correspondante 44 reçoit la portion tronconique 40 de la vis en appui pour permettre le bridage de la plaquette de coupe 48 dans la position de coupe, tel que précédemment décrit. La vis de bridage 20 peut assurer le bridage de la plaquette selon au moins deux modes différents.

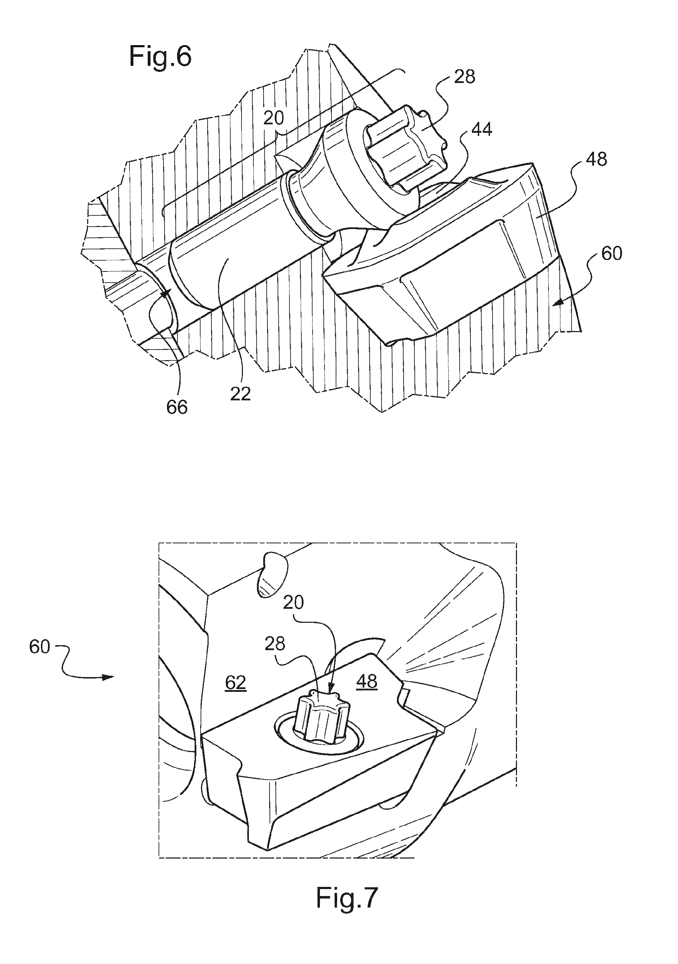

La figure 6 montre une vue schématique du bridage par appui tangentiel de la plaquette de coupe 48 dans le porte-outil 60. Ce mode de bridage de la plaquette est aussi illustré en figure 5. Selon ce mode de bridage, la vis 20 s'étend dans une direction tangentielle à la surface de bridage de la plaquette 48 et est reçue dans un alésage 66 correspondant du porte-outil 60. La surface de bridage de la plaquette 48 correspond à la surface supérieure de la plaquette 48, la surface supérieure étant la surface présentant les arêtes de coupe en position de coupe. Dans ce mode bridage, la vis 20 ne traverse pas la plaquette 48 contrairement à un autre mode de bridage illustré par la figure 7 qui montre une vue schématique d'un bridage de la plaquette de coupe 48 dans le porte-outil 60 où la vis 20 traverse la plaquette 48. Un alésage (non illustré) est alors prévu dans le logement 62 du porte-outil 60 pour recevoir la vis 20 traversant le porte-outil 60.

Dans l'un ou l'autre des deux modes de bridage décrits, la plaquette 48 peut comprendre la surface 44 (non visible en figure 7) pour former une surface de butée de la vis de bridage. En particulier, la plaquette 48 peut être fabriquée pour être compatible avec les deux modes de bridage précédemment décrits. Les plaquettes 48 illustrées en figure 5 sont ainsi bridées à l'aide de vis s'étendant dans des directions tangentielles par rapport au surface supérieure des plaquettes, mais comprennent aussi un trou de bridage 46 permettant le bridage à l'aide d'une vis traversante. Lorsque la plaquette comprend le trou de bridage 46, la surface 44 peut être disposée à une des extrémités du trou de bridage comme illustré en figure 5.

Lorsque la vis de bridage proposée est prévue pour assurer ou lorsque la vis assure un bridage de plaquette de coupe par insertion dans le trou traversant, l'empreinte positive 28 peut s'étendre au-delà du cylindre fictif 36. En d'autres termes, l'empreinte positive 28 présente un diamètre maximal qui soit supérieur au diamètre de la grande base de la portion tronconique 40. Un tel mode de réalisation est une alternative au mode de réalisation de la vis 20 où l'empreinte positive 28 s'étend à l'intérieur du cylindre fictif 34 ou à l'intérieur du cylindre fictif 36 tel que précédemment décrit et illustré en figure 2. Le mode de réalisation de la vis avec une empreinte positive 28 s'étendant au-delà du cylindre fictif 36 est pertinent lorsque l'on fait l'hypothèse du respect, par l'utilisateur, du couple de serrage indiqué. L'augmentation de la taille de l'empreinte contribue alors à la transmission d'un couple important de desserrage de la vis. La transmission d'un couple important de desserrage assure un desserrage plus efficace de la vis. Ce desserrage plus efficace est particulièrement utile dans le cas où la vis, une fois en position de bridage, présente un couple de desserrage plus important que le couple de serrage de la vis en position de bridage. Un tel cas se présente notamment :
- lorsque la lubrification entre la vis et le porte-outil n'est plus présente du fait de l'évaporation progressive du lubrifiant; et/ou
- lorsque la vis a subi des variations géométriques, par exemple du fait de son oxydation ou de dilatations et de contractions consécutives à des variations de température.

L'obtention d'un desserrage plus efficace du fait de l'empreinte 28 s'étendant hors du cylindre 36 est particulièrement significatif pour des vis ayant des tiges filetées de faible diamètre, notamment pour les diamètres de tige filetée inférieurs ou égaux à 5mm et particulièrement pour les diamètres de tige filetée inférieurs ou égaux à 3mm.

## Revendications

1. Vis de bridage d'une plaquette de coupe (48) dans un logement (62) dédié de porte-outil (60), la vis de bridage comprenant une tige filetée (22) et une tête, la tête de vis comportant
une zone (24) munie d'une portion tronconique (40) de maintien de la plaquette (48) dans le logement (62) d'un porte-outil (60), la portion tronconique (40) s'étendant depuis la tige filetée (22) entre une petite base et une grande base;
une empreinte positive (28) d'entraînement de la vis (20) en vissage et en dévissage, l'empreinte positive (28) s'étendant suivant l'axe de la vis (20), depuis la zone (24) munie de la portion tronconique (40), du côté opposé à la tige filetée (22).

2. Vis de bridage selon la revendication 1, l'empreinte positive (28) s'étendant à l'intérieur d'un cylindre fictif (34, 36) ayant l'axe de la vis (20) pour axe de révolution et présentant un diamètre inférieur ou égal au diamètre de la grande base de la portion tronconique (40).

3. Vis de bridage selon la revendication 1 ou 2, l'empreinte positive (28) s'étendant dans l'axe de la vis (20) sur une longueur supérieure ou égale à 2mm.

4. Vis de bridage selon l'une des revendications 1 à 3, la tête de vis comprenant en outre une zone de butée (26) d'un embout de tournevis d'entraînement de la vis (20), la zone de butée (26) étant intermédiaire entre la zone (24) munie de la portion tronconique (40) et l'empreinte positive (28), la zone de butée (26) étant répartie autour de l'axe de la vis et de préférence constituée par un chanfrein, plus préférentiellement par un chanfrein de 45° par rapport à l'axe de la vis (20).

5. Vis de bridage selon l'une des revendications 1 à 4, la forme positive de l'empreinte positive (28) étant choisie dans le groupe de forme consistant en :
- une forme cruciforme, de préférence cruciforme Torx®;
- une forme polygonale à facettes planes;
- une forme polygonale à facettes curvilignes.

6. Vis de bridage selon l'une des revendications 1 à 5, la tige filetée (22) présentant un diamètre supérieur ou égale à 1,6 mm et de préférence inférieure à 10 mm, le diamètre étant plus préférentiellement choisi dans l'intervalle de diamètre de 1,6 à 8 mm.

7. Vis de bridage selon l'une des revendications 1 à 6, la zone (24) munie de la portion tronconique (40) étant pleine.

8. Vis de bridage selon l'une des revendications 1 à 6, comprenant un canal de lubrification (32) s'étendant suivant l'axe de la vis (20) et débouchant hors de la vis à travers l'empreinte positive (28) d'entraînement de la vis (20).

9. Vis de bridage selon l'une des revendications 1 à 8, la vis de bridage étant dépourvue d'empreinte négative d'entraînement de la vis (20) en vissage et en dévissage.

10. Utilisation d'une vis de bridage selon l'une des revendications 1 à 9 pour fixer une plaquette de coupe (48) dans un logement (62) de porte-outil (60), la portion tronconique (40) de la vis (20) venant en contact d'une surface correspondante de la plaquette de coupe (48).

11. Porte-outil comprenant au moins un logement (62) logeant une plaquette de coupe (48), le porte-outil (60) comprenant en outre une vis de bridage (20) selon l'une des revendications 1 à 9, la vis de bridage (20) assurant le bridage de la plaquette (48) dans le logement (62) par la mise en contact de la portion tronconique (40) de la vis (20) avec une surface correspondante de la plaquette de coupe (48).

12. Porte-outil selon la revendication 11, la vis de bridage (20) assurant le bridage de la plaquette (48) :
soit en traversant la plaquette de coupe (48), la plaquette de coupe (48) étant munie d'un trou de bridage (46) comprenant à une de ses extrémités la surface correspondante (44) à la portion tronconique (40) de la vis de bridage (20) ;
soit en étant disposée tangentiellement à la plaquette de coupe (48), la plaquette de coupe étant munie, sur une face de bridage, de la surface correspondante (44) à la portion tronconique (40) de la vis de bridage (20).

13. Utilisation du porte-outil (60) selon la revendication 11 ou 12 pour l'usinage de pièce en fonte.

14. Embout de tournevis comprenant une empreinte négative susceptible de coopérer avec l'empreinte positive (28) de la vis (20) selon l'une des revendications 1 à 9, pour entraîner la vis (20) en vissage et en dévissage.
